# FASCICULE DE BREVET EUROPEEN

(11) **EP 0 685 046 B1**
(45) Date de publication et mention de la délivrance du brevet: **24.03.1999**
(21) Numéro de dépôt: 95904588.1
(22) Date de dépôt: 22.12.1994
(51) Int. Cl.: F16F 15/12

(54) **VOLANT AMORTISSEUR, NOTAMMENT POUR VEHICULE AUTOMOBILE**
DÄMPFENDES SCHWUNGRAD, INSBESONDERE FÜR KRAFTFAHRZEUGE
FLYWHEEL, IN PARTICULAR FOR MOTOR VEHICLES

(30) Priorité: 23.12.1993 FR 9315581
(43) Date de publication de la demande: 06.12.1995
(73) Titulaire: VALEO, 75017 Paris (FR)
(72) Inventeur: FEIGLER, Jacques, F-95350 Saint-Brice-sur-Forêt (FR); CHAZOT, Frank, F-95580 Margency/Andilly (FR)
(74) Mandataire: Gamonal, Didier
(86) Numéro de dépôt international: FR9401513
(87) Numéro de publication internationale: WO9517618

(56) Documents cités:
- DE-A- 2 246 449
- DE-A- 3 622 630
- DE-A- 3 810 921
- FR-A- 815 273
- FR-A- 2 518 203
- FR-A- 2 553 848
- FR-A- 2 637 666
- PATENT ABSTRACTS OF JAPAN vol. 12, no. 490 (M-779) 21 Décembre 1988 & JP,A,63 210 435 (FUJI HEAVY IND. LTD.) 1 Septembre 1988

## Description

La présente invention concerne un volant amortisseur, notamment pour véhicule automobile, du genre comportant deux masses coaxiales montées mobiles l'une par rapport à l'autre à l'encontre d'un dispositif élastique d'amortissement comportant au moins un organe élastique intervenant entre lesdites masses.

Un tel volant amortisseur, dénommé usuellement double volant amortisseur, est décrit par exemple dans les documents FR-A-2 556 800, FR-A-2 571 461, FR-A-2 553 848.

Ainsi qu'on le sait, dans un volant amortisseur pour véhicule automobile, l'une des masses est calée en rotation sur le vilebrequin du moteur à combustion interne du véhicule, tandis que l'autre masse est calée en rotation, par l'intermédiaire d'un embrayage à friction, sur l'arbre d'entrée de la boîte de vitesses. Ce volant est prévu pour filtrer les vibrations qui prennent naissance dans la chaîne cinématique allant du moteur aux arbres de roues.

Ainsi dans ce système équipé du volant amortisseur, la fréquence de résonance est reportée en-dessous du régime de ralenti du moteur à combustion interne, en sorte qu'au démarrage et à l'arrêt du moteur on passe par la fréquence de résonance.

Au régime de marche normale du véhicule, les phénomènes de résonance n'existent pas, dans la plage de régime d'utilisation du moteur thermique. Néanmoins, il faut prévoir diverses dispositions pour atténuer les phénomènes de résonance au démarrage et à l'arrêt du moteur du véhicule automobile.

Ainsi dans le document FR-A-2 571 461, on a prévu une disposition avec un limiteur de couple, qui permet une rotation illimitée d'une masse par rapport à l'autre lorsque l'on passe par la fréquence de résonance.

Ce limiteur de couple doit être calculé pour transmettre le couple maximum du moteur et ne glisser au-delà dudit couple maximum. Il en résulte qu'il faut prévoir un coefficient de sécurité en sorte que le tarage du limiteur n'est pas optimum.

Dans le document FR-A-2 556 800, on a prévu de court-circuiter le dispositif élastique du volant amortisseur et d'établir une liaison temporaire parallèle de solidarisation en rotation des deux masses lors du démarrage du véhicule.

Ceci est réalisé par exemple à l'aide d'un pignon du démarreur qui, au moment du lancement du moteur à combustion interne, s'engage à la fois dans des dentures prévues en correspondance dans chacune des masses.

Cette disposition n'est pas entièrement satisfaisante car elle nécessite notamment de modifier le démarreur du véhicule. En outre un problème de phasage entre les dentures de chacune des masses se pose.

Dans le document FR-A-2 553 848 on a prévu un verrouillage temporaire du type centrifuge entre les deux masses lors du démarrage du véhicule.

Cette solution n'est pas également entièrement satisfaisante car ce verrouillage centrifuge peut se coincer. En outre il nécessite un grand nombre de pièces.

En outre dans les susmentionnés documents, les organes élastiques consistent usuellement en des ressorts hélicoïdaux de compression intervenant circonférentiellement entre les deux masses.

Ces ressorts, sous l'action de la force centrifuge, peuvent venir frotter par exemple contre une jupe appartenant à l'une des masses en sorte que des frottements et des usures de ressort peuvent se produire. Ces ressorts peuvent même se coincer dans certains cas.

Usuellement on prévoit de lubrifier ces ressorts en montant ceux-ci par exemple dans une cavité délimitée en majeure partie par l'une des masses et remplie au moins en partie de graisse. On peut également équiper les ressorts de pièces anti-usure, telles que des patins, des pièces en forme de goulotte.

En outre, la raideur torsionnelle du dispositif est contante et dans un encombrement donné la capacité de transmission de couple est limitée.

Usuellement on prévoit également un dispositif de frottement à hystérésis entre les deux masses avec une rondelle de frottement intervenant en différé pour amortir les phénomènes de résonance, mais dont le réglage n'est pas facile à réaliser.

De plus toutes ces dispositions peuvent faire apparaître un frottement non négligeable dans le domaine du régime de ralenti du moteur à combustion interne.

En utilisant des solutions du type de celles décrites dans les documents DE-A-36 22 630, FR-A-25 18 203 - conforme au préambule de la revendication 1 - et WO94/27062 publiée le 24-11-1994, on peut pallier ces inconvénients et donc de créer, de manière simple et économique, un nouveau volant amortisseur ayant une capacité de couple augmentée, peu sensible au démarrage et à l'arrêt du moteur du véhicule, tout en étant d'un coût réduit et en ayant un dispositif élastique d'amortissement doté d'au moins un organe élastique à frottement réduit ne nécessitant pas de lubrification.

Dans ces trois documents DE-A-36 22 630, FR-A-25 18 203 et WO94/27062, d'une part, l'organe élastique du dispositif élastique d'amortissement est monté à articulation sur l'une et l'autre desdites masses et intervient globalement, radialement entre lesdites masses pour la position de repos du volant amortisseur, en sorte que ledit organe élastique occupe une position globalement radiale de repos et des positions inclinées de travail, et, d'autre part, la seconde masse est montée tourillonnante sur la première masse à l'aide de moyens de palier. Dans le document DE-A-36 22 630 les moyens de palier sont implantés à la périphérie externe de la première masse, tandis que les documents FR-A-25 18 203 et WO94/27062 les moyens de paliers sont à distance de la périphérie interne de la première masse

Grâce à ce type de solution le volant amortisseur peut transmettre des couples plus élevés, tout en ayant un organe élastique à frottement parasite réduit du fait de son montage à articulation et plusieurs organes élastiques peuvent être prévus en étant répartis circonférentiellement de manière régulière.

Néanmoins il se pose un problème car dans le document DE-A-36 22 630 la deuxième masse est montée de manière concentrique par rapport à la première masse ce qui est de nature à augmenter l'encombrement radial.

Dans les documents FR-A-25 18 203 et WO94/27062 les masses sont montées décalées axialement l'une par rapport à l'autre mais l'organe élastique est relativement court.

La présente invention a donc pour objet de rallonger l'organe élastique à positions inclinées de travail et position globalement radiale de repos et ce de manière simple et économique.

Suivant l'invention ce problème est résolu par la partie caractérisante de la revendication 1.

On appréciera que la position des moyens d'articulation et des moyens de palier permet d'allonger radialement l'organe élastique ce qui est favorable à l'augmentation du débattement angulaire relatif entre les deux masses, ainsi que pour la transmission du couple.

L'examen des différentes situations d'utilisation du moteur thermique permet de mettre en évidence les avantages apportés par le dispositif objet de l'invention :
- lorsque le moteur est au ralenti, boîte de vitesses au point mort, la faible raideur associée au faible frottement du dispositif assure une filtration optimale ;
- lorsque le moteur est en prise et quels que soient son régime et le couple transmis, la caractéristique évolutive de la raideur torsionnelle permet la transmission du couple tout en assurant une filtration optimale grâce à un niveau de raideur qui bien que variable reste suffisamment faible et des frottements réduits ;
- dans les phases de démarrage et arrêt du moteur thermique, caractérisées par un très faible niveau de couple transmis, la caractéristique de raideur très basse et continûment variable avec le débattement permet naturellement d'atténuer très fortement le phénomène de 6 (la fréquence de résonance devient variable avec le débattement) cela en l'absence de tout dispositif de frottement ou de verrouillage complémentaire.

La raideur de ce dispositif élastique d'amortissement est donc variable avec son débattement grâce notamment à son montage à articulation.

D'une manière générale, le volant amortisseur selon l'invention est de réalisation économique et ne nécessite pas de graisser les ressorts.

Dans une première forme de réalisation la seconde masse est montée tourillonnante sur la première masse à l'aide de moyens de palier de taille réduite intervenant à la faveur d'un moyeu ou manchon central que présente la première masse à sa périphérie interne. Ces moyens de palier sont alors implantés radialement en dessous de trous de passage que présente la seconde masse, en coïncidence avec les trous de passage que présente la première masse pour les organes de la fixation. Ces trous de passage de la seconde masse permettent le passage d'au moins un outil permettant de fixer les organes de fixation sur l'arbre menant associé à la première masse.

Dans une autre forme de réalisation, l'organe élastique peut être monté à articulation à la périphérie externe de la seconde masse et ce radialement en dessous de moyens de palier intervenant à la périphérie externe des deux masses. L'organe élastique est alors monté à articulation sur un axe solidaire de la première masse et implanté globalement sur la même circonférence médiane que les trous de passage des organes de fixation de la première masse à son arbre menant.

Dans une forme de réalisation l'organe élastique peut être monté directement à articulation sur les deux masses. En variante l'organe élastique peut être monté à articulation sur les deux masses par l'intermédiaire de tirants, de préférence montés tête-bêche.

Le montage à articulation peut se faire à l'aide d'axes. Les axes associés à la seconde masse, formant le plateau de réaction d'un embrayage, peuvent être montés entre deux trous consécutifs prévus pour le passage d'au moins un outil destiné au vissage des vis de fixation de la première masse au vilebrequin du moteur.

En variante lesdits axes de la seconde masse peuvent être implantés à la faveur desdits trous.

La seconde masse peut être montée tourillonnante sur la première masse à l'aide de moyens de palier, tels qu'un roulement, intervenant soit entre la périphérie interne de la seconde masse et la périphérie externe d'un moyeu ou manchon de la première masse, soit entre la périphérie externe de la seconde masse et une pièce portée par la périphérie externe de la première masse.

Dans une forme de réalisation l'une des masses présente à sa périphérie externe une chape annulaire, éventuellement fractionnée, pour porter un moyen d'articulation, tel qu'un axe pour montage à articulation de l'organe élastique. Ainsi l'axe d'articulation est bien soutenu et en même temps l'organe élastique est calé axialement par ladite chape. Par exemple la chape peut être réalisée à la périphérie externe de la première masse, la seconde masse étant montée tourillonnante à sa périphérie interne sur des moyens de palier de taille réduite portés par un manchon central solidaire de la première masse. On obtient ainsi une première masse de grande inertie tout en ayant un organe élastique de grande longueur radiale.

Suivant une caractéristique on peut créer alors dans la première masse une fenêtre pour ventiler l'organe élastique, ladite fenêtre étant ménagée à la faveur d'une creusure de la première masse servant au logement de l'organe élastique et à la formation de la chape. L'organe élastique est ainsi ventilé et peut venir au plus près de la seconde masse ce qui permet de réduire l'encombrement axial du volant amortisseur. Bien entendu le nombre de fenêtres et le nombre d'organes élastique dépend des applications.

La description qui va suivre illustre l'invention en regard des dessins annexés dans lesquels :
- la figure 1 est une vue en coupe axiale d'un volant amortisseur selon l'invention ;
- la figure 2 est une vue partielle selon la flèche 2 de la figure 1 ;
- la figure 3 est une vue en coupe selon la ligne 3-3 de la figure 2 ;
- les figures 4 et 5 sont des vues montrant les tirants d'articulation ;
- la figure 6 est une vue schématique du dispositif élastique d'amortissement intervenant entre les deux masses ;
- la figure 7 est un diagramme montrant la courbe caractéristique du volant amortisseur selon l'invention ;
- la figure 8 est une vue partielle en coupe axiale pour un autre exemple de réalisation ;
- la figure 9 est une vue partielle en coupe axiale montrant le centre du double volant pour encore un autre exemple de réalisation ;
- la figure 10 est une vue partielle pour un autre exemple d'organe élastique ;
- la figure 11 est une vue selon la flèche 11 de la figure 10 ;
- les figures 12,13 et 14 sont des vues analogues à la figure 11 pour encore d'autres exemples de réalisation ;
- la figure 15 est une vue selon la flèche 15 de la figure 14.
- la figure 16 est une vue analogue à la figure 11 pour encore un autre exemple de réalisation ;
- les figures 17 et 18 sont des vues analogues aux figures 10 et 11 pour encore d'autres exemples de réalisation.

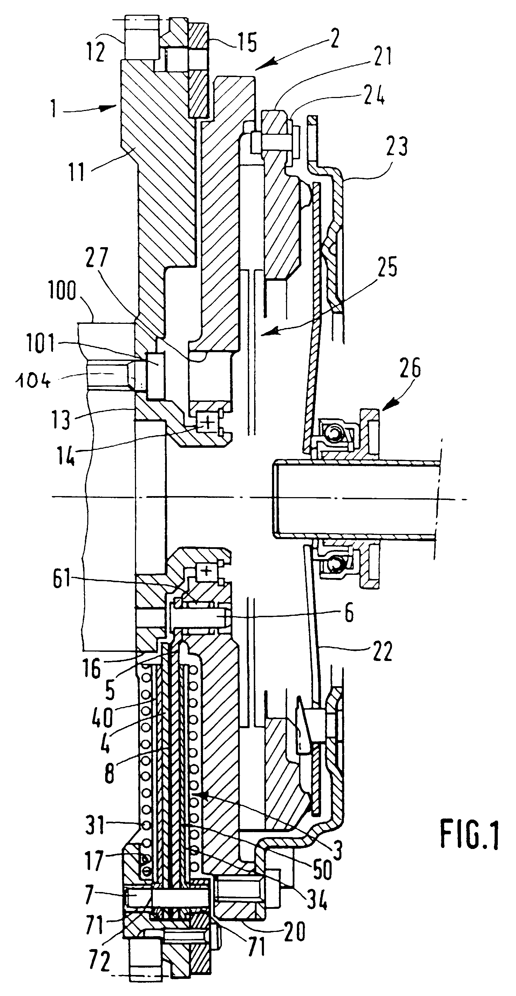

A la figure 1, on a représenté un volant amortisseur pour véhicule automobile comportant deux masses coaxiales 1,2 décalées axialement l'une par rapport à l'autre et montées mobiles l'une par rapport à l'autre à l'encontre d'un dispositif élastique d'amortissement 3 comportant au moins un organe élastique 31,32,33 intervenant entre les deux masses 1 et 2. La seconde masse 2 est montée, tourillonnante sur la première masse 1 à l'aide de moyens de palier 14 de taille réduite intervenant à la périphérie interne des deux masses 1,2.

Ici la première masse 1 comporte globalement un plateau 11 portant à sa périphérie externe une couronne de démarreur 12, propre à être entraînée par le démarreur du véhicule automobile.

Ici la masse 1 est entraînée par le moteur à combustion interne du véhicule automobile en étant fixée sur le vilebrequin 100 dudit moteur à l'aide de vis 101 et le plateau 11 présente centralement un manchon 13 d'orientation axiale. Ce manchon 13, ici d'un seul tenant avec le plateau 11, porte un palier 14 interposé radialement entre la périphérie externe du manchon 13 et la périphérie interne de la masse 2. La seconde masse 2 est donc montée tourillonnante à la périphérie interne de la première masse 1 par l'intermédiaire de moyens de palier 14.

Ici le palier 14 consiste en un roulement à billes calé axialement sur la masse 2 et sur le moyeu 13 à l'aide d'épaulements formés sur lesdites pièces 13,2 et de circlips engagés dans des gorges pratiquées dans lesdites pièces 13,2.

La masse 2 présente de place en place des trous 27 pour passage d'au moins un outil permettant le vissage des vis 101 et la fixation de la première masse 1 au vilebrequin 100.

Ces trous 27 sont donc axialement en coïncidence avec les trous 104 prévus dans le plateau 11 (à la périphérie interne de celui-ci) pour le passage des vis 101 de fixation au vilebrequin 100. Les moyens de palier 14 ont donc une taille réduite puisqu'ils s'étendent sur une circonférence de diamètre inférieur à celle des passages 27 et desdits trous 104 du plateau 11. Ceci permet d'augmenter la taille des organes élastiques 31,32,33 de manière décrite ci-après.

La deuxième masse 2, ici en fonte, forme le plateau de réaction d'un embrayage à friction comportant un plateau de pression 21, un diaphragme 22, un couvercle 23 et un disque de friction 25.

Ici le couvercle 23 a une forme d'assiette creuse à fond troué centralement et est fixé par son rebord radial à l'aide de vis sur le plateau de réaction 2. Le diaphragme 22 est monté de manière basculante sur le couvercle à l'aide de colonnettes, dont l'une est visible dans la partie basse de la figure 1.

Ce diaphragme 22 s'appuie sur le plateau de pression 21 et sollicite celui-ci en direction du plateau de réaction 2 pour serrage des garnitures de frottement, que porte le disque 25 à sa périphérie externe, entre lesdits plateaux de pression 21 et de réaction 2.

Le disque 25 est accouplé à un moyeu central (non visible) calé en rotation sur l'arbre d'entrée de la boîte de vitesses.

Le plateau de pression 21 est lié en rotation au couvercle 23 en étant monté mobile axialement par rapport à celui-ci, de manière connue en soi, à l'aide de languettes tangentielles 24.

Normalement l'embrayage est engagé et comme précité les garnitures de frottement du disque 25 sont serrées entre les plateaux 2,21.

Pour désengager l'embrayage, il faut agir ici en poussant, à l'aide d'une butée de débrayage 26 sur l'extrémité des doigts du diaphragme 22 pour faire pivoter celui-ci en sorte d'annuler la charge qu'exerce le diaphragme 22 sur le plateau de pression 21 rappelé alors en direction du fond du couvercle 23 par les languettes tangentielles 24.

Ainsi la première masse est calée en rotation sur un arbre menant, le vilebrequin du moteur à combustion interne, tandis que la seconde masse 2 est calée en rotation sur un arbre mené, l'arbre d'entrée de la boîte de vitesses, par l'intermédiaire d'un embrayage à friction 2,21 à 25.

Ici l'organe élastique 31,32,33 du dispositif élastique d'amortissement 3 est monté à articulation sur l'une et l'autre desdites masses 1,2. Ledit organe élastique intervient globalement radialement entre lesdites masses pour la position de repos du volant amortisseur, en sorte que ledit organe élastique occupe une position globalement radiale de repos et des positions inclinées de travail.

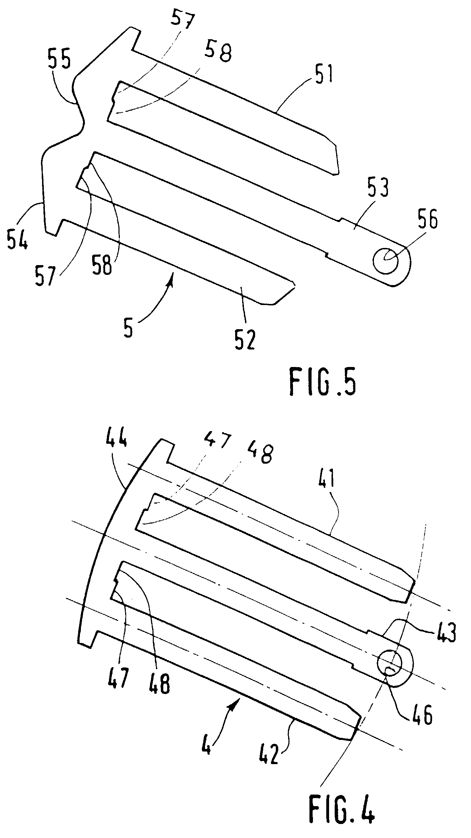

Ici ledit organe élastique est monté à articulation sur les deux masses 1,2 par l'intermédiaire de tirants 4,5 mieux visibles aux figures 4 et 5. Les tirants sont à l'image l'un de l'autre en étant ici métallique.

Plus précisément dans les figures 1 à 5, trois organes élastiques 31,32,33, sous forme de ressorts à boudin identiques, sont prévus par tirants 4,5 pour augmentation du couple transmis.

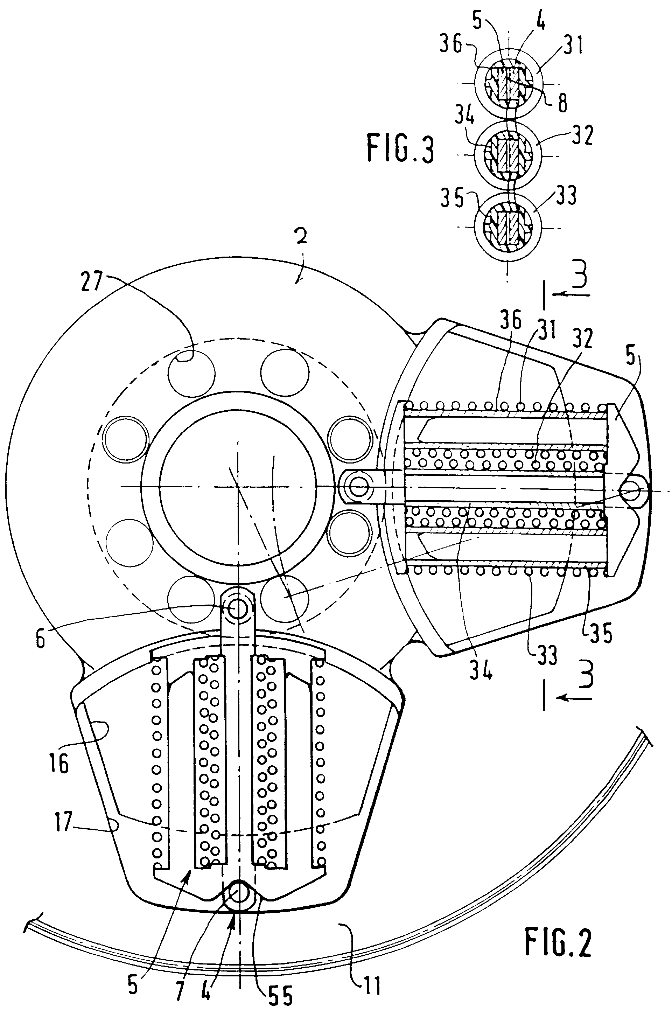

Il est prévu quatre équipages de tirants 4,5 et de ressorts 31,32,33 répartis régulièrement circulairement. Deux de ceux-ci sont représentés à la figure 2.

Ici, les ressorts 31, 32, 33 sont adjacents à la deuxième masse en s'étendant parallèlement à celle-ci.

Pour ce faire pour chaque équipage 4,5,31,32,33 précités le plateau 11 présente des fenêtres 16 et des creusures 17. Les creusures 17 sont pratiquées en majeure partie à la périphérie externe du plateau 11 de la masse 1 en regard de la masse 2, tandis que les fenêtres 16 s'étendent de la périphérie interne du plateau 11, radialement au-delà des vis 101.

Les creusures 17 et les fenêtres 16 permettent le montage des ressorts à boudin 31 à 33. Plus précisément les fenêtres 16 permettent une bonne ventilation des organes élastiques 31, 32, 33, tout en réduisant, ainsi que les creusures 17, l'encombrement axial. Les organes élastiques 31, 32, 33 peuvent ainsi venir à proximité de la seconde masse en s'étendant parallèlement à celle-ci.

Ici les tirants 4 et 5 sont en forme de tridents. Ils sont réalisés par découpage à la presse en étant en tôle.

Bien entendu, on peut prévoir d'autres dispositions selon les applications. Les tirants peuvent présenter une dent, deux dents, cinq dents etc. Dans ce cas un ressort, deux ressorts, cinq ressorts etc. sont prévus. Avantageusement on prévoit des dispositions à nombre impair de dents et de ressorts.

Ici le tirant 4 présente une base 44 à face dorsale bombée et trois dents 41,42,43 se raccordant d'un seul tenant à la base 44. Ce tirant 4 a une forme symétrique tout comme le tirant 5.

Les dents 41 et 42 sont à l'image l'une de l'autre et ont chacune une extrémité libre chanfreinée. Ces dents 41 et 42 encadrent de manière symétrique la dent centrale 43 plus longue, dont l'extrémité libre est élargie et présente un trou 46 pour le montage d'un axe d'articulation 7 décrit ci-après formant un premier moyen d'articulation. Entre les dents 42 et 43, la base 44 est étagée avec formation d'épaulements 47,48 décalés axialement l'un par rapport à l'autre.

Entre les dents 41 et 43, la base 44 présente une forme symétrique par rapport à celle qu'elle présente entre les dents 43 et 42 en sorte que ladite base est étagée à ce niveau.

Le tirant 5, de forme semblable à celui du tirant 4, présente une base 54 avec une face dorsale bombée, mais cette face dorsale est échancrée ou évidée centralement en 55 pour passage de l'axe d'articulation 6, formant un second moyen d'articulation décrit ci-après. Trois dents 51 à 53 se raccordent d'un seul tenant à la base 54.

Les dents 51 et 52 sont à l'image l'une de l'autre et présentent une extrémité libre biseautée. Les dents 51 et 52 encadrent de manière symétrique la dent centrale 53.

Cette dent centrale est plus longue que les dents 51 et 52 et présente une extrémité libre épanouie dotée d'un trou 56 pour montage sur un axe d'articulation 6.

Comme pour les tirants 4, la base 54 du tirant 5 est étagée entre les dents 52,53 et entre les dents 53,51 et ce de manière symétrique avec formation d'épaulements 57,58 décalés axialement l'un par rapport à l'autre.

On notera que l'épaulement 48 adjacent à la dent centrale 43 correspond à une creusure, tandis que pour le tirant 5 la creusure correspond à l'épaulement 57 le plus éloigné de la dent centrale 53. On occupe ainsi au mieux l'espace entre les deux bases 44, 54 des tirants avec un bon maintien des ressorts.

Selon une caractéristique les tirants 4 et 5 sont montés têche-bêche. Ici les dents 41,42,43-51,52,53 sont propres à venir en contact glissant les unes avec les autres.

Pour réduction des frottements, on prévoit d'interposer un revêtement 8 en matériau à faible coefficient de frottement, tel que du "Téflon", entre les deux tirants 4 et 5 pour faciliter le mouvement relatif entre les deux tirants 4,5.

Ces tirants sont montés à l'intérieur de guides 34,35,36 de forme tubulaire. Ainsi les faces externes des tirants 4 et 5 sont propres à venir frotter contre les faces internes des guides 34,35,36, ici de forme tubulaire à section interne rectangulaire, tout comme les dents des tirants 4 et 5.

Les guides 34,35,36 sont avantageusement en matière synthétique à faible coefficient de frottement et sont dimensionnés en fonction des dents des tirants 4 et 5.

Chaque guide 34,35,36 présente deux nervures de guidage diamétralement opposées 40,50 issues des bords longitudinaux des guides.

Ainsi qu'on l'aura compris et qu'il ressort à l'évidence des dessins, les ressorts à boudin 31,32,33 sont montés respectivement sur les guides 36,34,35 en étant enfilés sur ceux-ci en particulier sur les nervures 40,50, les bords latéraux des guides 34, 35, 36 étant arrondis pour épouser la périphérie interne desdits ressorts (figure 3).

On appréciera que grâce aux épaulements 47,48,57,58 on évite une interférence entre deux ressorts à boudin 31,32,33 consécutifs. Les risques de frottement sont donc minimisés.

En effet, le ressort central 52 s'appuie à l'une de ses extrémités sur les épaulements 58 du tirant 5 et à l'autre de ses extrémités sur les épaulements en creux 48 du tirant 4, tandis que le ressort 31 est en appui à l'une de ses extrémités sur les épaulements 47 du tirant 4 et à l'autre de ses extrémités sur les épaulements 57 du tirant 5. Il en est de même pour le ressort 33.

Ainsi grâce aux décalages axiaux les épaulements 57,58 et 47,48, on évite toute interférence entre les extrémités des ressorts 31,32,33.

Ces ressorts 31,32,33 agissent entre les bases 54,44 formant support pour lesdits ressorts (les extrémités radiales de ceux-ci).

On notera que les bases 44, 54 sont galbées en ayant une forme courbe entre les dents pour augmenter la portée des ressorts 31 à 33 (figure 3).

Grâce aux tubes-guides 34,35,36 et aux dents associées des tirants 4,5 on évite une déformation des ressorts 31,32 sous l'action de la force centrifuge, ainsi que les coincements.

Ici le tirant 5 est monté à articulation à sa périphérie interne, par sa dent centrale 53 et son trou 56 sur un axe d'articulation 6 (le second moyen d'articulation) porté à solidarisation par la périphérie interne de la seconde masse 2.

L'axe d'articulation 6, emmanchée à force dans la masse 2, présente une extrémité épaulée pour maintien de l'extrémité libre 53 entre ladite tête et la face du plateau 2 tournée vers le plateau 11.

Le fût du tirant 6 est monté à serrage dans un roulement à aiguilles 61 monté dans un trou, que présente le plateau 2 à cet effet. Ce trou est monté entre deux trous de passage 27 consécutifs (figure 2). Il a une taille inférieure à celui dudit trou 27, en étant implanté sur une même circonférence médiane que ce-ci.

En pratique l'axe 6 est engagé à force dans le trou de passage 56 de la dent 53, en sorte que le tirant 5 est monté à articulation à sa périphérie interne sur la masse 2. Le tirant 4 est monté à force par son trou 46 sur un axe 7 dont les extrémités sont montées à articulation, par l'intermédiaire de coussinets 71 montés respectivement dans un passage du plateau 11 et dans un passage d'une pièce de fermeture 15 portées par le plateau 11 à la périphérie externe de celui-ci.

Ces pièces 15 augmentent l'inertie de la masse 2 et sont adjacentes à la masse 2. Elles sont rapportées par vissage sur le plateau 11. Ici les pièces 15 appartiennent à une même rondelle de fermeture rigidifiant la première masse 1. La position des axes 7 contribue aussi à l'augmentation de l'inertie.

Ainsi le plateau 11 présente à sa périphérie externe des cavités délimitées par le plateau 11 et les pièces 15 pour montage des équipages 4,5,31 à 36. Ces cavités alternent circonférentiellement avec des parties pleines du plateau 11.

Le plateau 11, creux à sa périphérie externe, forme des chapes pour les axes 7avec la ou les pièces de fermeture 15.

Suivant une caractéristique de l'invention le dispositif élastique d'amortissement est donc monté à l'articulation à sa périphérie externe sur le plateau 11 à la faveur de moyens d'articulation 7, dit premiers moyens d'articulation, portés par des chapes 11,15 formées à la périphérie externe de la première masse 1. Autrement dit, la première masse 1 présente à sa périphérie externe une chape annulaire fractionnée par alternance circonférentielle de creusure 17 et de partie pleine appartenant au plateau 11. La masse 1 a donc une grande inertie. La chape permet également d'immobiliser axialement le dispositif d'amortissement 3.

On notera que l'axe 7 est immobilisé axialement grâce à un circlips 72 calé axialement par le plateau 11 et le tube de guidage 34.

On notera que la forme bombée de la base 44 du tirant 4 permet à celui-ci d'épouser la forme du bord interne de la fenêtre 16 plus large à sa périphérie interne qu'à sa périphérie externe (figure 2) pour conserver le maximum de matière et que la forme de la base 54 du tirant 5 permet, grâce à l'évidement central 55 de celui-ci, le passage de l'axe 7 ce qui permet d'augmenter la longueur des ressorts 31 à 33.

Ainsi pour la position de repos du volant amortisseur les ressorts 31 à 33 s'étendent parallèlement entre eux, le ressort central 32 ayant une orientation radiale pour la position de repos du volant amortisseur.

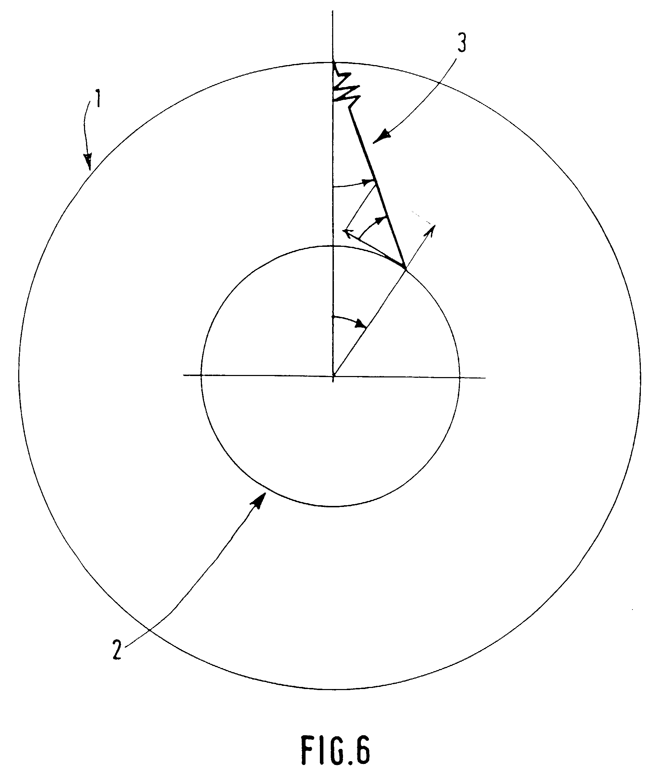

Cette position de repos, ici purement radiale, est stable. En effet, en se reportant par exemple à la figure 6, on voit que dès que la masse 2, par exemple se déplace par rapport à la masse 1, les ressorts 31,32,33 tendent à exercer une action de rappel vers la position de repos. Ces ressorts travaillent ici en compression.

La ligne d'action est donc ici radiale.

Grâce à la disposition selon l'invention, on obtient un dispositif élastique d'amortissement 3 de raideur variable. En effet, grâce au montage à articulation, les efforts exercés par le dispositif 3 se décomposent en une force tangentielle active et en une force radiale inactive dirigée vers l'axe de l'ensemble (figure 6) et encaissée ici par la seconde masse.

Ainsi pour le régime de ralenti du moteur, la raideur du dispositif 3 est faible puis elle augmente continûment pour les régimes (couples) plus élevés du moteur, le débattement angulaire entre les deux masses 1 et 2 croissant.

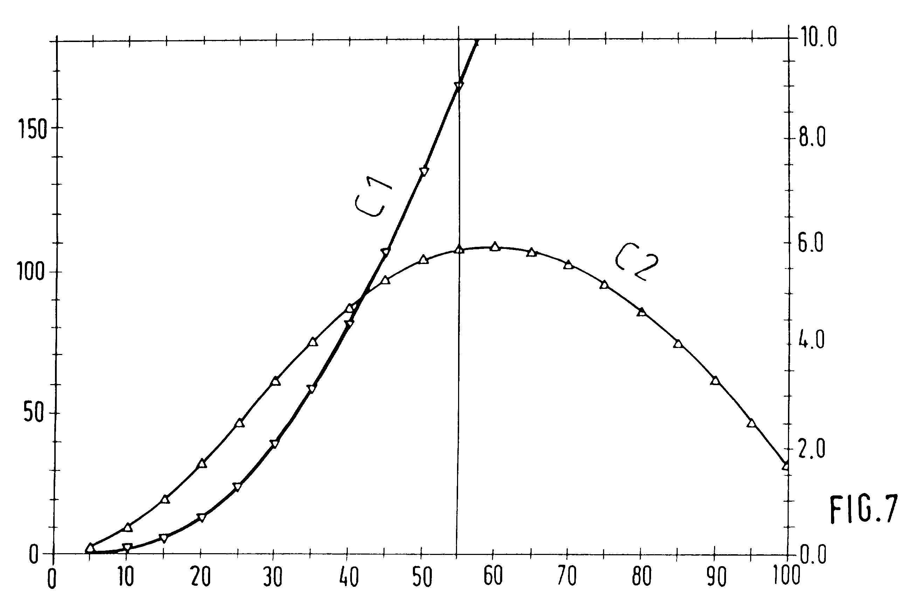

On peut obtenir grâce à l'invention de grands débattements angulaires entre les deux masses (figure 7) comparables à ceux obtenus avec les meilleurs dispositifs à ressorts à action circonférentielle, avec un grand débattement angulaire pour filtrer les vibrations dans le domaine du régime de ralenti du moteur.

Ainsi lors du démarrage et de l'arrêt du moteur du véhicule automobile, on passe par la fréquence de résonance du moteur et l'on obtient un très bon amortissement car durant cette phase le débattement angulaire entre les deux masses croît rapidement, ainsi que la raideur du dispositif élastique d'amortissement 3 selon l'invention.

L'examen des différentes situations d'utilisation du moteur thermique permet de mettre en évidence les avantages apportés par le dispositif objet de l'invention :
- lorsque le moteur est au ralenti, boîte de vitesses au point mort, la faible raideur associée au faible frottement du dispositif assure une filtration optimale ;
- lorsque le moteur est en prise et quels que soient son régime et le couple transmis, la caractéristique évolutive de la raideur torsionnelle permet la transmission du couple tout en assurant une filtration optimale grâce à un niveau de raideur qui bien que variable reste suffisamment faible et des frottements réduits ;
- dans les phases de démarrage et arrêt du moteur thermique, caractérisées par un très faible niveau de couple transmis, la caractéristique de raideur très basse et continûment variable avec le débattement permet naturellement d'atténuer très fortement le phénomène de résonance (la fréquence de résonance devient variable avec le débattement) cela en l'absence de tout dispositif de frottement ou de verrouillage complémentaire.

On obtient donc un volant amortisseur à grands débattements sans avoir recours à une lubrification des organes élastiques du dispositif élastique d'amortissement 3. Ainsi, à la figure 7, on a représenté en abscisse le débattement angulaire D en degré entre les deux masses et en coordonnée respectivement le couple transmis C en Nm et la raideur en Nm par degré du dispositif élastique selon l'invention. Ainsi la courbe C1 représente la courbe caractéristique du couple transmis et la courbe C2 la courbe de raideur torsionnelle du dispositif élastique. On notera que la raideur peut être nulle au voisinage de la position stable de repos.

On notera que les frottements au niveau des ressorts 31,32,33 sont minimisés du fait de la présence des guides 34 à 36 et que ces ressorts 31,32,33 se déforment peu du fait de la présence de ces guides 34 à 36 nervurés.

En outre les tirants 4,5 peuvent glisser aisément l'un au contact de l'autre du fait des guides 34 à 36 et du revêtement 8 à faible coefficient de frottement.

On notera que le bord interne concave de la fenêtre 16 (figure 2) est en forme d'arc de cercle pour permettre un débattement du dispositif élastique d'amortissement 3, qui pivote (s'incline) lors du débattement angulaire relatif entre les deux masses 1 et 2. Le bord externe convexe de la fenêtre 16 est également en forme d'arc de cercle. Cette fenêtre 16 de ventilation est réalisée dans la creusure 17 (figure 2) et diminue faiblement l'inertie de la première masse.

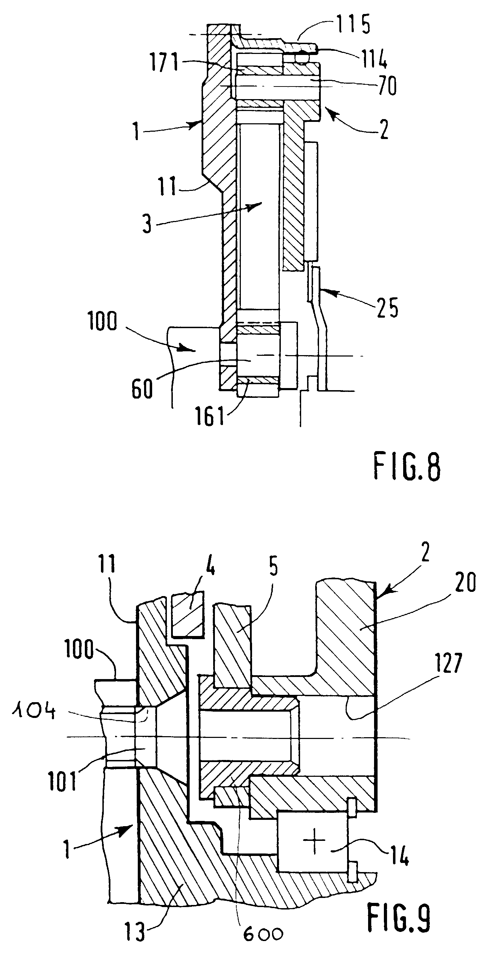

Bien entendu on peut inverser les structures. Ainsi (figure 8) la seconde masse 2 peut être montée tourillonnante à la périphérie externe de la première masse 1 à l'aide de moyens de palier 114, ici un roulement à billes 114 monté à la périphérie externe des masses 2,1. Les organes élastiques selon l'invention peuvent donc avoir une grande longueur tout en ayant une grande inertie pour la première masse 1.

Pour ce faire, ce roulement comporte une pièce 115 en tôle fixée par exemple par vissage à la périphérie externe du plateau 11. Cette pièce 115 forme la bague extérieure du roulement, la bague interne étant formée par la périphérie externe de la masse 2. Dans ce cas, le dispositif élastique d'amortissement 3 est monté à articulation à sa périphérie externe sur la masse 2 et à articulation à sa périphérie interne sur la masse 1, contrairement à l'exemple de réalisation de la figure 1 où ledit dispositif est monté à articulation à sa périphérie interne sur la masse 2 et à sa périphérie externe sur la masse 1.

Dans cet exemple de réalisation, les axes d'articulation 60 et 70 sont entourés par des manchons d'articulation 161,171 dans lesquels sont engagées, par leur trou de passage, les dents centrales des tirants 4,5. Bien entendu on peut prévoir des roulements à aiguilles au lieu des manchons 161,175.

Plus précisément l'axe 60 est emmanchée à force dans le plateau 11 à la périphérie interne de celui-ci en étant épaulée pour maintient du manchon 161, tandis que l'axe 70 est emmanchée à force à la périphérie externe de la masse 2 radialement au-dessus du disque de friction 25 et en dessous des moyens de palier 114. Ici les axes 60 alternent circonférentiellement avec les trous de passage des vis de fixation (non visibles) pratiqués dans le plateau 11.

Ces axes 60 sont implantées sur la même circonférence médiane que lesdites trous de passage de vis de fixation.

Bien entendu la masse 2 peut présenter une chape annulaire éventuellement fractionnée, à sa périphérie externe pour montage des axes 70. Ainsi l'une des masses présente dans tous les cas une chape annulaire, éventuellement fractionnée, à sa périphérie externe pour montage des axes concernés et bon soutien de ceux-ci.

A la figure 9 l'axe d'articulation 600, sur lequel est monté le tirant 5, peut être creux et être monté à la faveur d'un trou de passage 127 de la masse 2 pour le passage d'un outil servant à visser la vis de fixation 101. L'outil passe à travers l'axe 600 emmanché à force dans le trou 127. Ce trou 127 est donc en coïncidence avec le trou 104 prévu à la périphérie interne du plateau 11 pour passage de la vis 101 concernée. Ainsi les axes 600 sont implantées sur la même circonférence que les trous 104 de la première masse 1 prévus pour le passage des organes de fixation 101, ici les vis 101.

Bien entendu la présence du tirant n'est pas obligatoire.

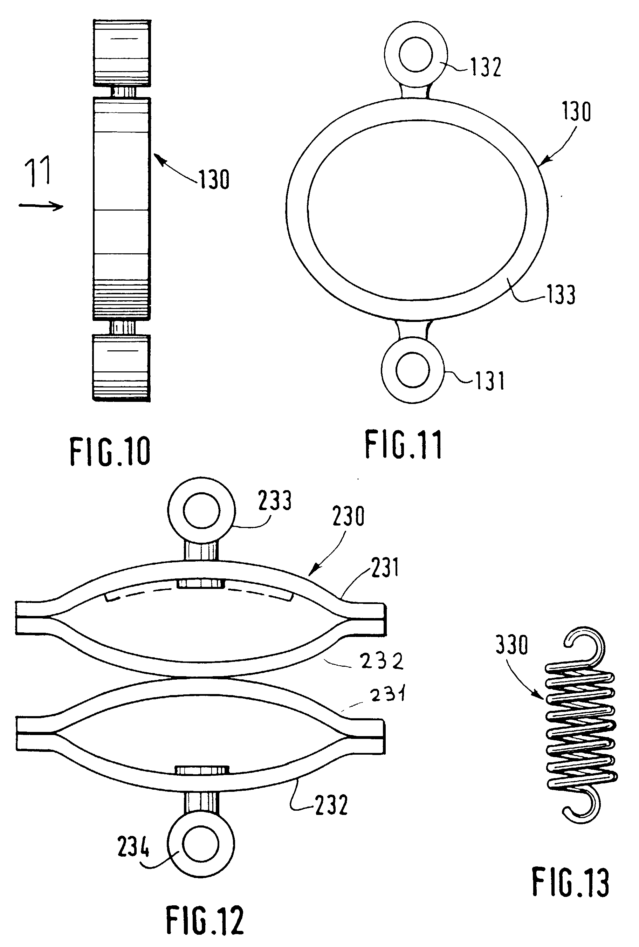

Ainsi dans les figures 10 et 11 le dispositif élastique d'amortisseur 130 peut consister en une rondelle 133 métallique portant, à la faveur de bras radiaux, de manière diamétralement opposée deux manchons 131,132 pour montage à articulation respectivement sur les axes 6 et 7 de la figure 1.

Les axes des manchons 161,102 sont donc radialement alignés.

A la figure 12, on voit que le dispositif élastique d'amortissement 230 peut consister en un empilage de lames 231,232 bombées portant à chacune de leurs extrémités des manchons d'articulation 233,234 pour montage à articulation du dispositif 230 sur respectivement les axes 7 et 6 de la figure 1.

On voit à la figure 12, que le dispositif élastique d'amortissement présente deux lames 231 et deux lames 232 montées tête-bêche en étant en contact les unes avec les autres à leurs extrémités circonférentielles.

Les lames centrales 231 et 232 sont bombées et sont en contact l'une avec l'autre, les lames d'extrémité 231 et 232 portant les manchons d'articulation 233 et 234.

Bien entendu les lames 232,231 sont fixées entre elles par exemple par soudage.

A la figure 13 le dispositif élastique d'amortissement 330 consiste en un ressort à boudin avec à chacune de ses extrémités une boucle d'accrochage pour montage sur les axes 6 et 7 ou tout autre dispositif similaire par exemple des renflements en forme de tourillons issus des masses.

Ainsi dans les figures 10 à 13, lorsque l'on agit sur les extrémités des dispositifs élastiques d'amortissement, on déforme élastiquement par traction la partie centrale de ces dispositifs élastiques d'amortissement. Les organes élastiques des dispositifs des figures 10 à 13 sont montés ainsi directement par leurs extrémités externe et interne à articulation sur la première et seconde masses.

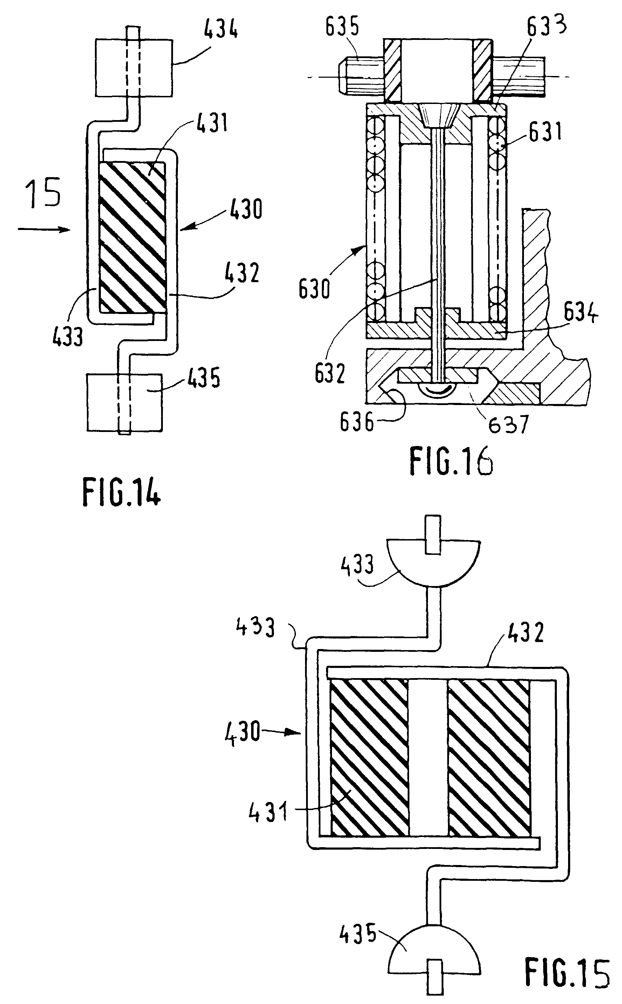

Bien entendu alors que dans les figures précédentes les organes élastiques des dispositifs élastiques d'amortissement étaient du type métallique, en variante (figures 14 et 15) les organes élastiques d'amortissement 430 peuvent comporter des blocs en matière élastique 431.

Chaque bloc 431 intervient entre deux tirants 432,433 à section globalement en forme de U, dont l'une des branches est prolongée pour porter une sphère d'articulation 434,435 pour montage à articulation dans des berceaux semi-sphériques correspondants pratiqués dans les masses 1 et 2 ou rapportés sur celles-ci.

On notera que le bloc 431 est centralement creux.

Le bloc 431 intervient entre les branches non prolongées radialement des tirants 433,432 montés tête-bêche. Le bloc 431 est monté à adhérisation sur les branches concernées desdits tirants 432,433, par exemple par collage ou vulcanisation in situe.

A la figure 16 les dispositifs élastiques d'amortissement comportent deux supports 633,634 entre lesquels intervient radialement un ressort à boudin 631.

Le support 633 porte un câble fixé à l'aide d'une rondelle 637 dans une creusure 636 de l'une des masses, ici la masse 2. Le support 633 peut coulisser le long d'un câble 632. Le support 634, dans sa partie supérieure, porte un axe d'articulation 635 en deux parties pour montage à articulation sur l'une des masses. Le câble traverse la partie inférieure du support. Ainsi l'une des articulations est réalisée à l'aide du câble 632 et l'autre à l'aide de l'axe 635, le support 633 pouvant coulisser par rapport au support 634 en étant guidé par ledit support.

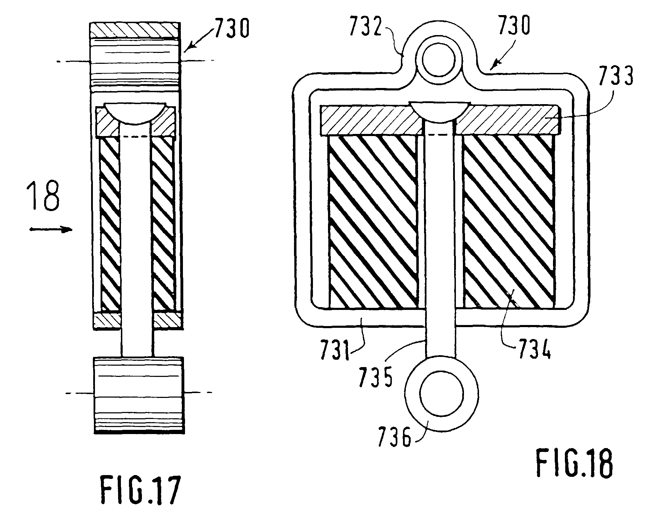

Dans les figures 17 et 18 le dispositif élastique d'amortissement 730 comporte un support 731 de forme rectangulaire avec une extrémité supérieure 732 en forme de boucle pour montage d'un axe d'articulation centralement creux.

Le côté du support 731 opposé à celui portant la boucle 732 est traversé à jeu par une tige 735 portant un axe d'articulation creux 736. Cette tige traverse à jeu le bloc en matière élastique 734 et est fixé à un support 733.

Le bloc 734 est fixé par adhérisation au support 733 et au côté concerné du support 731.

On voit que l'invention ouvre la voie à de grands nombres d'application et que dans les figures 14 à 18 les organes élastiques travaillaient en compression, en sorte qu'en variante il n'y a pas besoin de fixer les blocs en matière élastique, par exemple de l'élastomère ou du caoutchouc. Il suffit pour cela de monter les blocs sous précontrainte.

En variante, figure 1, le ressort central 32 peut être omis, du fait de la symétrie les deux ressorts 31, 32 interviennent purement radialement entre les deux masses pour la position de repos.

Dans la figure 16 on peut remplacer le ressort 631 par un bloc en matière élastique centralement creux.

Il en est de même dans les figures 14, 15 et 17, 18, les blocs 431, 731 pouvant être remplacés par des ressorts à boudin. Dans ce cas il faut épauler les tirants pour centrer les ressorts.

En variante, la première masse 1 peut comporter un plateau 11 en forme de flasque portant à sa périphérie externe une couronne d'orientation axiale sur laquelle on vient fixer une rondelle de fermeture 15, éventuellement fractionnée. Des rivets assemblent alors ensemble la couronne et la rondelle de fermeture au flasque 11 en traversant axialement pour ce faire la pièce de fermeture, la couronne et le plateau 11.

La masse 1 présente donc à sa périphérie externe une cavité annulaire permettant un logement du dispositif élastique d'amortissement 3 selon l'invention avec formation d'une chape annulaire pour le montage des premiers moyens d'articulation (les axes 7 par exemple) et augmentation de son inertie.

Dans tous les cas, ces premiers moyens d'articulation 7 sont donc bien soutenues puisqu'ils s'entendent axialement entre le plateau 11 et la rondelle de fermeture 15, éventuellement fractionnées en secteurs annulaires en étant engagés dans la rondelle de fermeture 15 et le plateau 11. Les premiers moyens d'articulation ne s'étendent donc pas en porte-à-faux et sont donc bien soutenus. Ces premiers moyens ne risquent donc pas de basculer.

En outre, on augmente l'inertie de la première masse 1 puisque la chape et les premiers moyens d'articulation 7 sont implantés à la périphérie externe de la première masse.

De plus, cela entraîne une augmentation de la longueur de l'organe élastique appartenant au dispositif élastique d'amortissement selon l'invention. On augmente ainsi le débattement angulaire entre les deux masses 1,2 au bénéfice d'une meilleure filtration des vibrations.

En variante, les seconds moyens d'articulation 6 peuvent être implantés sur une circonférence de diamètre légèrement supérieure à celle prévue dans le plateau 11 pour le passage des organes de fixation (les vis 101) en sorte que dans tous les cas, les secondes moyens d'articulations 6, 600 sont implantés suivant l'invention globalement sur la même circonférence que les trous de passage 104 du plateau 11, prévus pour le passage des vis 101. Cela contribue également à augmenter la longueur des organes élastiques appartenant au dispositif élastique d'amortissement selon l'invention. Les moyens de palier 14 étant pour ce faire, sont implantés soit radialement en dessous des trous de passage 27 (figure 1) en étant de petite taille et donc économique, soit à la périphérie externe de la masse 2 (figure 8).

Alors que dans les figures illustrées, les premier et second moyens d'articulation sont radialement alignés pour la position de repos du volant amortisseur, la ligne d'action étant radiale, en variante ces moyens d'articulation peuvent ne pas être radialement alignés pour la position de repos, l'un des moyens d'articulation étant alors légèrement décalé circonférentiellement pour la position de repos de l'amortisseur par rapport au rayon passant par l'autre moyen d'articulation.

Bien entendu les moyens de palier 14 peuvent consister en un revêtement, par exemple à base de carbone diamant amorphe réalisé, par exemple sur le manchon 13 de la figure 1, qui peut être rapporté sur le plateau 11, par exemple par rivetage.

Le nombre des organes élastiques dépend des applications, ainsi que leur répartition circonférentielle. Dans les figures 1 à 7 quatre équipages sont prévus. Bien entendu on peut prévoir trois équipages répartis régulièrement circulairement.

La rondelle de fermeture 15 peut se prolonger vers l'intérieur et être dotée de fenêtres pour passage des organes élastiques.

Enfin, les outils associés aux vis aux organes de fixation 101 ont une forme adaptée aux têtes de ceux-ci. Ces têtes peuvent avoir une empreinte en forme de croix ou de six-pans. Tous cela dépend des applications.

## Revendications

1. Volant amortisseur, notamment pour véhicule automobile, du genre comportant deux masses coaxiales (1,2) décalées axialement l'une par rapport à l'autre montées mobiles l'une par rapport à l'autre, à l'encontre d'un dispositif élastique d'amortissement (3,130,230...) comportant au moins un organe élastique (31 à 33 - 133 - 231,232...) qui est monté à articulation sur l'une et l'autre desdites masses et qui intervient globalement, radialement entre lesdites masses pour la position de repos du volant, en sorte que ledit organe élastique occupe une position globalement radiale de repos et des positions inclinées de travail, dans lequel la seconde masse (2) est montée tourillonnante sur la première masse (1) à l'aide de moyens de palier (14,114) et dans lequel la première masse (1) est destinée à être fixée à un arbre menant, tandis que la deuxième masse (2) forme le plateau de réaction d'un embrayage à friction, caractérisé en ce que les moyens de palier sont implantés à l'une des périphéries interne ou externe de la seconde masse, et en ce que ledit organe élastique est monté à articulation à la périphérie interne de l'une des deux masses (1,2) à la faveur des moyens d'articulation (6,60,600) implantés globalement sur une même circonférence médiane que les trous (104) que présente la première masse à sa périphérie interne pour passage des organes de fixation (101) de la première masse (1) à l'arbre menant.

2. Volant amortisseur selon la revendication 1, caractérisé en ce que l'organe élastique (31 à 33;;;) est monté à articulation à la périphérie interne de l'une des deux masses (1,2) à la faveur de moyens d'articulation (6, 60, 600) alternant circonférentiellement avec les trous (104) de passage d'organes de fixation (101) de la première masse à un arbre menant (page 17 lignes 2 à 4 figures 2, 8).

3. Volant amortisseur selon la revendication 1 ou 2, caractérisé en ce que l'une des masses (1,2) présente à sa périphérie externe une chape, éventuellement fractionnée pour porter un moyen d'articulation (7), tel qu'un axe pour montage à articulation dudit organe élastique.

4. Volant amortisseur selon la revendication 3, caractérisé en ce que la chape est réalisée à la périphérie externe de la première masse (1), la seconde masse (2) étant montée tourillonnante à sa périphérie interne sur des moyens de palier (14) de taille réduite portés par un manchon centrale (13) solidaire de la première masse (1).

5. Volant amortisseur selon la revendication 4, caractérisé en ce que ladite chape est réalisée à l'aide de creusures (17) pratiquées dans un plateau (11) que présente la première masse (1).

6. Volant amortisseur selon la revendication 5, caractérisé en ce qu'une fenêtre (16) est créée dans ladite creusure (17) pour montage dudit organe élastique et ventilation de celui-ci.

7. Volant amortisseur selon la revendication 5 ou 6, caractérisé en ce que ladite chape est délimitée par une pièce de fermeture (15) éventuellement fractionnée, fixée sur le plateau (11) de la première masse (1) à la périphérie externe de celle-ci.

8. Volant amortisseur selon la revendication 7, caractérisé en ce que au moins un axe à articulation est monté tourillonnant dans ladite pièce de fermeture (15) et dans ledit plateau (11).

9. Volant amortisseur selon l'une quelconque des revendications 1 à 8, caractérisé en ce que la seconde masse (2) est montée tourillonnante à la périphérie externe de la première masse (1) avec intervention de moyens de palier (114) intervenant entre les périphéries externes desdites masses (1,2), en ce que l'organe élastique (31 à 33 - 133 - 231,232 ..) est montée à articulation à la périphérie externe de la seconde masse (2) et à articulation à la périphérie interne de la première masse (1), et en ce que ledit organe élastique est monté à articulation à la périphérie externe de la seconde masse (2) radialement en dessous desdits moyens de palier (114).

10. Volant amortisseur selon la revendication 9, caractérisé en ce qu'une pièce (115) est fixée à la périphérie externe d'un plateau (11) que comporte la première masse (1), en ce que ladite pièce (115) forme la bague extérieure d'un roulement (114) constituant lesdits moyens de palier et en ce que la bague interne dudit roulement (114) est formée à la périphérie externe de la seconde masse (2).

11. Volant amortisseur selon l'une quelconque des revendications 1 à 8, caractérisé en ce que la seconde masse (2) est montée tourillonnante sur la première masse (1) à l'aide de moyens de palier (14) de taille réduite intervenant entre la périphérie interne de la seconde masse (2) et la périphérie externe d'un manchon centrale (13) que présente la première masse (1) à sa périphérie interne et en ce que lesdits moyens de palier (14) sont implantés radialement en dessous de trou de passage (27) que présente la seconde masse (2) pour passage d'au moins un outil permettant de fixer les organes de fixation sur l'arbre menant associé à la première masse, lesdits trous de passage de la seconde masse (2) étant en coïncidence avec les trous (104) prévus dans la première masse (1) pour passage des organes de fixation (101).

12. Volant amortisseur selon la revendication 11, caractérisé en ce que l'organe élastique (31 à 33 - 133 - 231, 232...) est monté à articulation à la périphérie externe de la première masse (1) et à articulation à la périphérie interne sur la seconde masse (2).

13. Volant amortisseur selon l'une quelconque des revendications 9 à 12 dans lequel la première masse (1) comporte un plateau (11), caractérisé en ce que le plateau (11) présente une fenêtre (16) pour montage dudit organe élastique et ventilation de celui-ci.

14. Volant amortisseur selon l'une quelconque des revendications 9 à 13, caractérisé en ce que ledit organe élastique est monté à articulation sur lesdites masses (1, 2) par l'intermédiaire d'au moins un axe d'articulation (6,7 - 60, 70 - 600).

15. Volant amortisseur selon la revendication 14 en combinaison avec la revendication 11, caractérisé en ce que l'axe d'articulation (6) est monté entre deux trous consécutifs (27) de la seconde masse (2) prévus pour le passage d'au moins un outil pour le vissage de la première masse (1) à son arbre menant associé.

16. Volant amortisseur selon la revendication 14 en combinaison avec la revendication 11, caractérisé en ce que l'axe d'articulation est monté à la faveur d'un trou (127) de la seconde masse (2) prévue pour le passage d'au moins un outil pour la fixation de la première masse (1) à son arbre menant associé.

17. Volant amortisseur selon l'une quelconque des revendications 1 à 16, caractérisé en ce que l'organe élastique (330) du dispositif élastique d'amortissement (130,230,330) est monté directement par ses extrémités à articulation sur la première et la seconde masses.

18. Volant amortisseur selon l'une quelconque des revendications 1 à 17, caractérisé en ce que le dispositif élastique d'amortissement (630) comporte un câble (632) par lequel il est monté à articulations sur l'une des masses, et un axe d'articulation (635) pour montage à articulation sur l'autre masse.

19. Volant amortisseur selon l'une quelconque des revendications 1 à 18, caractérisé en ce que l'organe élastique (31, 32, 33, 431) est monté à articulation sur les deux masses (1, 2) par l'intermédiaire de tirants (4,5 - 432, 433) montés tête-bêche et en ce que l'un des tirants (45, 432, 433...) est monté à articulation à la périphérie externe de l'une des deux masses (42), tandis que l'autre tirant est monté à articulation à la périphérie interne de l'autre des deux masses (1, 2).

20. Volant amortisseur selon la revendication 19, aractérisé en ce que les tirants (4,5) sont à l'image l'un de l'autre.

21. Volant amortisseur selon la revendication 20 caractérisé en ce que les tirants (4, 5) présentent chacun une base (44,54) et un nombre impair de dents (41,42,43 - 51,52,53) se raccordant à ladite base.

22. Volant amortisseur selon la revendication 21, caractérisé en ce que les tirants (4,5) comportent trois dents (41,42,43 - 51,52,53) et en ce que l'une des dents (43-53) est encadrée symétriquement par deux autres dents (42,41-52,51) et présente une extrémité libre dotée d'un trou (46-56) pour montage d'une axe d'articulation (6,7).

23. Volant amortisseur selon la revendication 21 ,ou 22, caractérisé en ce que les dents des tirants (4,5) sont en contact les unes avec les autres avec interposition d'une couche (8) à faible coefficient de frottement.

24. Volant amortisseur selon la revendication 23, caractérisé en ce que lesdites dents des tirants (4,5) sont montées à l'intérieur de tubes de guidage (34 à 36).

25. Volant amortisseur selon la revendication 24, caractérisé en ce que lesdits tubes de guidage (34 à 36) sont en matière synthétique à faible coefficient de frottement et présentent chacun deux nervures diamétralement opposées.

26. Volant amortisseur selon la revendication 25, caractérisé en ce que des ressorts à boudin (31,32,33) sont enfilés sur lesdits tubes de guidage (34 à 36).

27. Volant amortisseur selon l'une quelconque des revendications 1 à 25, caractérisé en ce que l'organe élastique (31, 33 - 133...) comporte un ressort à boudin 31 à 33, 330.

28. Volant amortisseur selon l'une quelconque des revendications 1 à 25, caractérisé en ce que l'organe élastique (431, 734) comporte un bloc en matière élastique.

## Patentansprüche

1. Dämpfungsschwungrad, insbesondere für Kraftfahrzeuge, umfassend zwei koaxiale Massen (1, 2), die axial zueinander versetzt und im Verhältnis zueinander beweglich entgegen einer elastischen Dämpfungsvorrichtung (3, 130, 230 ...) gelagert sind, die mindestens ein elastisches Organ (31 bis 33 - 133 - 231, 232 ...) umfaßt, das an der einen und der anderen der besagten Massen angelenkt ist und das im Hinblick auf die Ruhestellung des Schwungrads insgesamt radial zwischen den besagten Massen wirksam wird, so daß das besagte elastische Organ eine insgesamt radiale Ruhestellung und geneigte Arbeitsstellungen einnimmt, wobei die zweite Masse (2) anhand von Lagermitteln (14, 114) drehbar an der ersten Masse (1) gelagert ist und wobei die erste Masse (1) dazu bestimmt ist, an einer treibenden Welle befestigt zu werden, während die zweite Masse (2) die Gegenanpreßplatte einer Reibungskupplung bildet , **dadurch gekennzeichnet**, daß die Lagermittel am inneren oder äußeren Umfang der zweiten Masse angeordnet sind und daß das besagte elastische Organ am inneren Umfang einer der zwei Massen (1, 2) anhand der Gelenkmittel (6, 60, 600) angelenkt ist, die insgesamt auf einem gleichen mittleren Kreisumfang wie die Löcher (104) angeordnet sind, die die erste Masse an ihrem inneren Umfang für den Durchgang der Befestigungsorgane (101) zur Befestigung der ersten Masse (1) an der treibenden Welle aufweist.

2. Dämpfungsschwungrad nach Anspruch 1, **dadurch gekennzeichnet**, daß das elastische Organ (31 bis 33 ...) am inneren Umfang einer der beiden Massen (1, 2) anhand von Gelenkmitteln (6, 60, 600) angelenkt ist, die sich umfangsmäßig mit den Durchgangslöchern (104) von Befestigungsorganen (101) zur Befestigung der ersten Masse an einer treibenden Welle abwechseln (Seite 17, Zeilen 2 bis 4, Figuren 2, 8).

3. Dämpfungsschwungrad nach Anspruch 1 oder 2 , **dadurch gekennzeichnet**, daß eine der Massen (1, 2) an ihrem äußeren Umfang einen, gegebenenfalls unterteilten Gabelbügel aufweist, um ein Gelenkmittel (7), wie etwa eine Achse, für die Anlenkung des besagten Befestigungsorgans zu tragen.

4. Dämpfungsschwungrad nach Anspruch 3, **dadurch gekennzeichnet**, daß der Gabelbügel am äußeren Umfang der ersten Masse (1) ausgeführt ist, während die zweite Masse (2) drehbar mit ihrem inneren Umfang auf Lagermitteln (14) mit geringer Größe gelagert ist, die an einer fest mit der ersten Masse (1) verbundenen mittigen Muffe (13) angebracht sind.

5. Dämpfungsschwungrad nach Anspruch 4, **dadurch gekennzeichnet**, daß der besagte Gabelbügel anhand von Einsenkungen (17) ausgeführt ist, die in eine Platte (11) eingearbeitet sind, die die erste Masse (1) aufweist.

6. Dämpfungsschwungrad nach Anspruch 5, **dadurch gekennzeichnet**, daß ein Fenster (16) in die besagte Einsenkung (17) für die Anbringung des besagten elastischen Organs und seine Belüftung eingearbeitet ist.

7. Dämpfungsschwungrad nach Anspruch 5 oder 6 , **dadurch gekennzeichnet**, daß der besagte Gabelbügel durch ein, gegebenenfalls unterteiltes Verschlußteil (15) begrenzt wird, das auf der Platte (11) der ersten Masse (1) an deren äußerem Umfang befestigt ist.

8. Dämpfungsschwungrad nach Anspruch 7, **dadurch gekennzeichnet**, daß mindestens eine Gelenkachse drehbar in dem besagten Verschlußteil (15) und in der besagten Platte (11) gelagert ist.

9. Dämpfungsschwungrad nach einem der Ansprüche 1 bis 8, **dadurch gekennzeichnet** daß die zweite Masse (2) drehbar am äußeren Umfang der ersten Masse (1) unter Einfügung von Lagermitteln (114) gelagert ist, die zwischen den äußeren Umfängen der besagten Massen (1, 2) wirksam werden, daß das elastische Organ (31 bis 33 - 133 - 231, 232 ...) am äußeren Umfang der zweiten Masse (2) und am inneren Umfang der ersten Masse (1) angelenkt ist und daß das besagte elastische Organ am äußeren Umfang der zweiten Masse (2) radial unterhalb der besagten Lagermittel (114) angelenkt ist.

10. Dämpfungsschwungrad nach Anspruch 9, **dadurch gekennzeichnet**, daß ein Teil (115) am äußeren Umfang einer Platte (111) befestigt ist, die die erste Masse (1) umfaßt, daß das besagte Teil (115) den Außenring eines Wälzlagers (114) bildet, aus dem die besagten Lagermittel bestehen, und daß der Innenring des besagten Wälzlagers (114) am äußeren Umfang der zweiten Masse (2) ausgebildet ist.

11. Dämpfungsschwungrad nach einem der Ansprüche 1 bis 8, **dadurch gekennzeichnet**, daß die zweite Masse (2) drehbar an der ersten Masse (1) anhand von Lagermitteln (14) mit geringer Größe gelagert ist, die zwischen dem inneren Umfang der zweiten Masse (2) und dem äußeren Umfang einer mittigen Muffe (13) wirksam werden, die die erste Masse (1) an ihrem inneren Umfang umfaßt, und daß die besagten Lagermittel (14) radial unterhalb von Durchgangslöchern (27) angeordnet sind, die die zweite Masse (2) für den Durchgang mindestens eines Werkzeugs aufweist, mit dem die Befestigungsorgane an der mit der ersten Masse verbundenen treibenden Welle befestigt werden können, wobei sich die besagten Durchgangslöcher der zweiten Masse (2) in Übereinstimmung mit den Löchern (104) befinden, die in der ersten Masse (1) für den Durchgang der Befestigungsorgane (101) vorgesehen sind.

12. Dämpfungsschwungrad nach Anspruch 11 , **dadurch gekennzeichnet**, daß das elastische Organ (31 bis 33 - 133 - 231, 232 ...) am äußeren Umfang der ersten Masse (1) und am inneren Umfang der zweiten Masse (2) angelenkt ist.

13. Dämpfungsschwungrad nach einem der Ansprüche 9 bis 12, bei dem die erste Masse (1) eine Platte (11) umfaßt, **dadurch gekennzeichnet**, daß die Platte (11) ein Fenster (16) für die Anbringung des besagten elastischen Organs und dessen Belüftung aufweist.

14. Dämpfungsschwungrad nach einem der Ansprüche 9 bis 13, **dadurch gekennzeichnet,** daß das besagte elastische Organ an den besagten Massen (1, 2) über mindestens eine Gelenkachse (6, 7 - 60, 70 - 600) angelenkt ist.

15. Dämpfungsschwungrad nach Anspruch 14 in Verbindung mit Anspruch 11, **dadurch gekennzeichnet**, daß die Gelenkachse (6) zwischen zwei aufeinanderfolgenden Löchern (27) der zweiten Masse (2) angebracht ist, die für den Durchgang mindestens eines Werkzeugs für die Verschraubung der ersten Masse (1) an ihrer zugehörigen treibenden Welle vorgesehen sind.

16. Dämpfungsschwungrad nach Anspruch 14 in Verbindung mit Anspruch 11, **dadurch gekennzeichnet**, daß die Gelenkachse mittels eines Lochs (127) der zweiten Masse (2) angebracht ist, das für den Durchgang mindestens eines Werkzeugs zur Befestigung der ersten Masse (1) an ihrer zugehörigen treibenden Welle vorgesehen ist.

17. Dämpfungsschwungrad nach einem der Ansprüche 1 bis 16, **dadurch gekennzeichnet,** daß das elastische Organ (330) der elastischen Dämpfungsvorrichtung (130, 230, 330) durch seine Enden direkt an der ersten und der zweiten Masse angelenkt ist.

18. Dämpfungsschwungrad nach einem der Ansprüche 1 bis 17, **dadurch gekennzeichnet,** daß die elastische Dämpfungsvorrichtung (630) einen Seilzug (632), durch den sie an einer der Massen angelenkt ist, und eine Gelenkachse (635) für die Anlenkung an der anderen Masse umfaßt.

19. Dämpfungsschwungrad nach einem der Ansprüche 1 bis 18, **dadurch gekennzeichnet,** daß das elastische Organ (31, 32, 33, 431) an einer der beiden Massen (1, 2) über entgegengesetzt angebrachte Streben (4, 5 - 432, 433) angelenkt ist und daß eine der Streben (45, 432, 433 ...) am äußeren Umfang einer der beiden Massen (42) angelenkt ist, während die andere Strebe am inneren Umfang der anderen der beiden Massen (1, 2) angelenkt ist.

20. Dämpfungsschwungrad nach Anspruch 19 , **dadurch gekennzeichnet**, daß die Streben (4, 5) in Entsprechung zueinander ausgeführt sind.

21. Dämpfungsschwungrad nach Anspruch 20 , **dadurch gekennzeichnet**, daß die Streben (4, 5) jeweils eine Grundfläche (44, 54) und eine ungerade Anzahl von Zähnen (41, 42, 43 - 51, 52, 53) aufweisen, die sich an die besagte Grundfläche anschließen.

22. Dämpfungsschwungrad nach Anspruch 21 , **dadurch gekennzeichnet,** daß die Streben (4, 5) drei Zähne (41, 42, 43 - 51, 52, 53) umfassen und daß einer der Zähne (43 - 53) symmetrisch von den beiden anderen Zähnen (42, 41 - 52, 51) umgeben ist und ein freies Ende aufweist, das mit einem Loch (46 - 56) für die Anbringung einer Gelenkachse (6, 7) versehen ist.

23. Dämpfungsschwungrad nach Anspruch 21 oder 22, **dadurch gekennzeichnet**, daß die Zähne der Streben (4, 5) unter Einfügung einer Schicht (8) mit niedrigem Reibungskoeffizienten miteinander in Kontakt stehen.

24. Dämpfungsschwungrad nach Anspruch 23 , **dadurch gekennzeichnet**, daß die besagten Zähne der Streben (4, 5) im Innern von Führungsrohren (34 bis 36) angebracht sind.

25. Dämpfungsschwungrad nach Anspruch 24 , **dadurch gekennzeichnet,** daß die besagten Führungsrohre (34 bis 36) aus Kunststoff mit niedrigem Reibungskoeffizienten bestehen und jeweils zwei diametral gegenüberliegende Rippen aufweisen.

26. Dämpfungsschwungrad nach Anspruch 25 , **dadurch gekennzeichnet**, daß auf den besagten Führungsrohren (34 bis 36) Schraubenfedern (31, 32, 33) aufgesteckt sind.

27. Dämpfungsschwungrad nach einem der Ansprüche 1 bis 25, **dadurch gekennzeichnet,** daß das elastische Organ (31, 33 - 133 ...) eine Schraubenfeder (31 bis 33, 330) umfaßt.

28. Dämpfungsschwungrad nach einem der Ansprüche 1 bis 25, **dadurch gekennzeichnet,** daß das elastische Organ (431, 734) einen Block aus elastischem Material umfaßt.

## Claims

1. Damping flywheel, notably for a motor vehicle, of the type having two coaxial masses (1, 2) offset axially with respect to each other and mounted so as to be able to move with respect to each other, counter to an elastic damping device (3, 130, 230 ...) having at least one elastic member (31 to 33 - 133 - 231, 232 ...) which is mounted for articulation on each of the said masses and which acts overall, radially between the said masses for the idle position of the flywheel, so that the said elastic member occupies a roughly radial idle position and inclined working positions, in which the second mass (2) is mounted so as to be journalled on the first mass (1) by means of bearing means (14, 114) and in which the first mass (1) is intended to be fixed to a driving shaft, whilst the second mass (2) forms the reaction plate of a friction clutch, characterised in that the bearing means are located at one of the internal or external peripheries of the second mass, and in that the said elastic member is mounted for articulation at the internal periphery of one of the two masses (1, 2) by means of articulation means (6, 60, 600) located roughly on the same median circumference as the holes (104) which the first mass has at its internal periphery for passage of the members (101) for fixing the first mass (1) to the driving shaft.

2. Damping flywheel according to Claim 1, characterised in that the elastic member (31 to 33 ...) is mounted for articulation at the internal periphery of one of the two masses (1, 2) by means of articulation means (6, 60, 600) alternating circumferentially with the holes (104) for passage of the members (101) for fixing the first mass to a driving shaft (page 17 lines 2 to 4 Figures 2, 8).

3. Damping flywheel according to Claim 1 or 2, characterised in that one of the masses (1, 2) has, at its external periphery, a fork joint, possibly divided to carry an articulation means (7), such as a shaft for pivotally mounting the said elastic member.

4. Damping flywheel according to Claim 3, characterised in that the fork joint is produced at the external periphery of the first mass (1), the second mass (2) being mounted so as to be journalled at its internal periphery on bearing means (14) of small size carried by a central sleeve (13) secured to the first mass (1).

5. Damping flywheel according to Claim 4, characterised in that the said fork joint is produced by means of hollows (17) formed in a plate (11) on the first mass (1).

6. Damping flywheel according to Claim 5, characterised in that an aperture (16) is created in the said hollow (17) for mounting the said elastic member and ventilation thereof.

7. Damping flywheel according to Claim 5 or 6, characterised in that the said fork joint is delimited by a closure piece (15), possibly divided, fixed to the plate (11) on the first mass (1) at the external periphery thereof.

8. Damping flywheel according to Claim 7, characterised in that at least one articulation axis is mounted so as to be journalled in the said closure piece (15) and in the said plate (11).

9. Damping flywheel according to any one of Claims 1 to 8, characterised in that the second mass (2) is mounted so as to be journalled at the external periphery of the first mass (1) with the intervention of bearing means (114) acting between the external peripheries of the said masses (1, 2), and in that the elastic member (31 to 33 - 133 - 231, 232 ...) is mounted for articulation at the external periphery of the second mass (2) and for articulation at the internal periphery of the first mass (1), and in that the said elastic member is mounted for articulation at the external periphery of the second mass (2) radially below the said bearing means (114).

10. Damping flywheel according to Claim 9, characterised in that a piece (115) is fixed to the external periphery of a plate (11) on the first mass (1), in that the said piece (115) forms the outer ring of a bearing (114) constituting the said bearing means and in that the inner ring of the said bearing (114) is formed at the external periphery of the second mass (2).

11. Damping flywheel according to any one of Claims 1 to 8, characterised in that the second mass (2) is mounted so as to be journalled on the first mass (1) by means of bearing means (14) of small size acting between the internal periphery of the second mass (2) and the external periphery of a central sleeve (13) which the first mass (1) has at its internal periphery and in that the said bearing means (14) are located radially below a passage hole (27) which the second mass (2) has for passage of at least one tool for fixing the fixing members to the driving shaft associated with the first mass, the said passage holes in the second mass (2) coinciding with the holes (104) provided in the first mass (1) for the fixing members (101) to pass.

12. Damping flywheel according to Claim 11, characterised in that the elastic member (31 to 33 - 133 - 231, 232 ...) is mounted for articulation at the external periphery of the first mass (1) and for articulation at the internal periphery on the second mass (2).

13. Damping flywheel according to any one of Claims 9 to 12, in which the first mass (1) has a plate (11), characterised in that the plate (11) has an aperture (16) for mounting the said elastic member and ventilation thereof.

14. Damping flywheel according to any one of Claims 9 to 13, characterised in that the said elastic member is mounted for articulation on the said masses (1, 2) by means of at least one pivot pin (6, 7 - 60, 70 - 600).

15. Damping flywheel according to Claim 14 in combination with Claim 11, characterised in that the pivot pin (6) is mounted between two consecutive holes (27) in the second mass (2) provided for the passage of at least one tool for screwing the first mass (1) onto its associated driving shaft.

16. Damping flywheel according to Claim 14 in combination with Claim 11, characterised in that the pivot pin is mounted by means of a hole (127) in the second mass (2) provided for the passage of at least one tool for fixing the first mass (1) to its associated driving shaft.

17. Damping flywheel according to any one of Claims 1 to 16, characterised in that the elastic member (330) of the elastic damping device (130, 230, 330) is mounted directly by its ends for articulation on the first and second masses.

18. Damping flywheel according to any one of Claims 1 to 17, characterised in that the elastic damping device (630) has a cable (632) by means of which it is mounted for articulation on one of the masses, and a pivot pin (635) for mounting for articulation on the other mass.

19. Damping flywheel according to any one of Claims 1 to 18, characterised in that the elastic member (31, 32, 33, 431) is mounted for articulation on the two masses (1, 2) by means of tie rods (4, 5 - 432, 433) mounted in opposite orientations and in that one of the tie rods (45, 432, 433 ...) is mounted for articulation at the external periphery of one of the two masses (42), whilst the other tie rod is mounted for articulation at the internal periphery of the other one of the two masses (1, 2).

20. Damping flywheel according to Claim 19, characterised in that the tie rods (4, 5) are in the image of each other.

21. Damping flywheel according to Claim 20, characterised in that the tie rods (4, 5) each have a base (44, 54) and an odd number of teeth (41, 42, 43 - 51, 52, 53) connected to the said base.

22. Damping flywheel according to Claim 21, characterised in that the tie rods (4, 5) have three teeth (41, 42, 43 - 51, 52, 53) and in that one of the teeth (43-53) is framed symmetrically by two other teeth (42, 41 - 52, 51) and has a free end provided with a hole (46-56) for mounting a pivot pin (6, 7).

23. Damping flywheel according to Claim 21 or 22, characterised in that the teeth on the tie rods (4, 5) are in contact with each other with the interposing of a coating (8) with a low coefficient of friction.

24. Damping flywheel according to Claim 23, characterised in that the said teeth on the tie rods (4, 5) are mounted inside guide tubes (34 to 36).

25. Damping flywheel according to Claim 24, characterised in that the said guide tube (34 to 36) are made from synthetic material with a low coefficient of friction and each have two diametrically opposed ribs.

26. Damping flywheel according to Claim 25, characterised in that coil springs (31, 32, 33) are slipped onto the said guide tubes (34 to 36).

27. Damping flywheel according to any one of Claims 1 to 25, characterised in that the elastic member (31, 33 - 133 ...) has a coil spring 31 to 33, 330.

28. Damping flywheel according to any one of Claims 1 to 25, characterised in that the elastic member (431, 734) has a block made of elastic material.
